# EUROPÄISCHE PATENTANMELDUNG

(11) **EP 3 627 298 A1**
(43) Veröffentlichungstag der Anmeldung: **25.03.2020**
(21) Anmeldenummer: 18195965.1
(22) Anmeldetag: 21.09.2018
(51) Int. Cl.: G06F 3/048

(54) **VERFAHREN ZUR MESSUNG EINER PHYSIKALISCHEN MESSGRÖSSE UND MESSSYSTEM ZUR DURCHFÜHRUNG DES VERFAHRENS**

(71) Anmelder: Kistler Holding AG, 8408 Winterthur (CH)
(72) Erfinder: Angliker, Marco, 8032 Zürich (CH); De Simoni, Frederic, 5000 Aarau (CH)

(57) **Zusammenfassung**

Die Erfindung betrifft ein Verfahren (V) zur Messung einer physikalischen Messgrösse (M); unter Verwendung von Verfahrensparametern eines Messsystems (S), welche Verfahrensparameter mehrere für die Messung der physikalischen Messgrösse (M) benötigte Messeinheiten (1) umfassen, welche Verfahrensparameter die Verfahrensschritte von mindestens einer Erfassung (2) der physikalischen Messgrösse (M) als Messsignal, von mindestens einer Auswertung (3) vom Messsignal zu einem Messwert, von mindestens einer Darstellung (4) vom Messsignal oder Messwert und von mindestens einer Weiterverarbeitung (5) vom Messsignal oder Messwert umfassen; mit einem Computerprogrammprodukt (C) zur Einstellung und Überwachung von Verfahrensparametern; wobei jeder Verfahrensparameter in einem ihm zugeordneten Fenster auf einer graphischen Benutzeroberfläche (GUI) wiedergegeben wird; wobei jedes Fenster einklappbar ist, ein eingeklapptes Fenster (1x1 bis 5x5) verwendet genau den Raum auf der graphischen Benutzeroberfläche (GUI), um den zugeordneten Verfahrensparameter in Kurzform wiederzugeben; und wobei jedes Fenster aufklappbar ist, ein aufgeklapptes Fenster (111 bis 135, 411 bis 425) verwendet genau den Raum auf der graphischen Benutzeroberfläche (GUI), um den zugeordneten Verfahrensparameter in Langform wiederzugeben.

## Beschreibung

### Technisches Gebiet

Die Erfindung betrifft ein Verfahren zur Messung einer physikalischen Messgrösse und ein Messsystem zur Durchführung des Verfahrens gemäss den Oberbegriffen der unabhängigen Ansprüche.

### Stand der Technik

Mit einer Messeinheit wird eine physikalische Messgrösse gemessen. Die physikalische Messgrösse kann eine Kraft, ein Druck, eine Masse, eine Temperatur, usw. sein. Im Allgemeinen sind dazu mehrere zeitlich und räumlich voneinander getrennte Verfahrensschritte notwendig. Beispielsweise wird ein Druck in einem Messraum gemessen. Dazu erfasst ein im Messraum angeordneter piezoelektrischer Drucksensor den Druck und erzeugt eine zum erfassten Druck proportionale elektrische Ladungsmenge. Die elektrische Ladungsmenge wird über ein Signalkabel als Messsignal zu einer räumlich vom Messraum entfernten Auswerteeinheit übermittelt. Dort wird das Messsignal zu einem Messwert ausgewertet. Eine solche Messeinheit weist somit mehrere Übertragungsglieder wie Sensor, Messkabel und Auswerteeinheit auf, welche Übertragungsglieder eine Messkette bilden. Direkt benachbarte Übertragungsglieder der Messkette stehen bei der Messung der physikalischen Messgrösse in einer Ursache-Wirkung-Beziehung zueinander.

Oft bilden mehrere Messeinheiten zusammen ein Messsystem. Beispielsweise wird als physikalische Messgrösse ein Zylinderdruck von achtzehn Zylindern eines Schiffsmotors über einen Zeitraum von mehreren Wochen permanent gemessen. Der Zylinderdruck beträgt mehrere 100bar, eine Zylindertemperatur beläuft sich auf mehrere 100°C. In diesem Beispiel weist das Messsystem achtzehn Messeinheiten auf. Jede Messeinheit weist für einen Zylinder einen piezoelektrischen Drucksensor und ein Thermoelement auf, welche den Zylinderdruck und die Zylindertemperatur erfassen. Eine Messfrequenz beträgt 10kHz. Jede Messeinheit weist ein Messkabel auf, um Messsignale an eine Auswerteeinheit zu übermitteln. Die Auswerteeinheit wiederum weist 36 Messkanäle zum zylinderspezifischen Einlesen der Messsignale auf. Die Auswerteeinheit verstärkt die Messsignale elektrisch und stellt elektrisch verstärkten Messsignale als Messwerte dar und speichert die Messwerte ab.

Das Messsystem weist somit viele Verfahrensparameter wie die Messeinheiten, die Erfassung der physikalischen Messgrösse, die Auswertung vom Messsignal zu einem Messwert, usw. auf. Die meisten Verfahrensparameter des Messsystems müssen eingestellt werden, und alle Verfahrensparameter des Messsystems müssen überwacht werden. So muss eingestellt werden, welcher piezoelektrischer Drucksensor und welches Thermoelement an welchem Zylinder angeordnet sind, oder welches Messkabel an welchem Messkanal der Auswerteeinheit angeschlossen ist, usw. Auch wird überwacht, ob der gemessene Zylinderdruck und die gemessene Zylindertemperatur für den Schiffsmotor spezifische Grenzwerte einhalten und bei Abweichung wird ein Alarm gegeben. Auch müssen die Messungen gestartet und gestoppt werden, und Verfahrensparameter müssen geändert werden, beispielsweise wenn ein Messkabel defekt ist und ausgewechselt werden muss. Dazu weist das Messsystem ein Computerprogrammprodukt zur Einstellung und Überwachung von Verfahrensparametern auf. Das Computerprogrammprodukt ist über eine graphische Benutzeroberfläche (Graphical User Interface oder GUI) bedienbar. Ein Benutzer vom Messsystem kann das Messsystem über die graphische Benutzeroberfläche bedienen und überwachen und Messungen starten und stoppen. Die graphische Benutzeroberfläche weist Fenster auf. In den Fenstern werden Informationen über das Messsystem ausgeben. In den Fenstern sind aber auch Steuersignale zur Einstellung und Überwachung von Verfahrensparametern und zum Starten und Stoppen von Messungen eingebbar.

Aufgrund der grossen Vielfalt und der grossen Anzahl von Verfahrensparameter weist das Computerprogrammprodukt auch eine Vielzahl von Fenstern auf. Oft ist diese Vielzahl von Fenstern hierarchisch verschachtelt, was eine Übersichtlichkeit und Verständlichkeit der graphischen Benutzeroberfläche erschwert. Beispielsweise wird eine Information über eine Anzahl der Messkanäle zum Einlesen der Messsignale in einem viertobersten Fenster eines Fensterstapels ausgegeben. Das viertoberste Fenster ist hinter drei darüber liegenden Fenstern des Fensterstapels verborgen. Das viertoberste Fenster ist erst nach sukzessivem Öffnen der drei darüber liegenden Fenster des Fensterstapels in der graphische Benutzeroberfläche sichtbar. Vor einer Ausgabe der Information müssen also zuerst drei darüber liegende Fenster des Fensterstapels geöffnet oder verschoben werden. Eine solche graphische Benutzeroberfläche ist mühsam zu bedienen.

Eine erste Aufgabe der vorliegenden Erfindung ist es, ein Verfahren zur Messung einer physikalischen Messgrösse bereitzustellen, welches Verfahren ein Computerprogrammprodukt zur Einstellung und Überwachung von Verfahrensparametern verwendet, welches Computerprogrammprodukt über eine graphische Benutzeroberfläche einfach zu bedienen und übersichtlich und verständlich ist. Die Erfindung stellt sich die weitere Aufgabe, ein Messsystem zur Durchführung des Verfahrens anzugeben.

### Darstellung der Erfindung

Diese Aufgaben werden durch die Merkmale der unabhängigen Ansprüche gelöst.

Die Erfindung betrifft ein Verfahren zur Messung mindestens einer physikalischen Messgrösse; unter Verwendung von Verfahrensparametern eines Messsystems, welche Verfahrensparameter mehrere für die Messung der physikalischen Messgrösse benötigte Messeinheiten umfassen, welche Verfahrensparameter die Verfahrensschritte von mindestens einer Erfassung der physikalischen Messgrösse als Messsignal, von mindestens einer Auswertung vom Messsignal zu einem Messwert, von mindestens einer Darstellung vom Messsignal oder Messwert und von mindestens einer Weiterverarbeitung vom Messsignal oder Messwert umfassen; und mit einem Computerprogrammprodukt zur Einstellung und Überwachung der Verfahrensparameter; wobei jeder Verfahrensparameter in einem ihm zugeordneten Fenster auf einer graphischen Benutzeroberfläche wiedergegeben wird; wobei jedes Fenster einklappbar ist, ein eingeklapptes Fenster verwendet genau den Raum auf der graphischen Benutzeroberfläche, um den zugeordneten Verfahrensparameter in Kurzform wiederzugeben; und wobei jedes Fenster aufklappbar ist, ein aufgeklapptes Fenster verwendet genau den Raum auf der graphischen Benutzeroberfläche, um den zugeordneten Verfahrensparameter in Langform wiederzugeben.

Durch gezieltes Ein- und Aufklappen von den Verfahrensparametern zugeordneten Fenstern auf der graphischen Benutzeroberfläche wird Raum gewonnen, um Informationen übersichtlich und verständlich wiederzugeben. So sind alle Verfahrensparameter in ihnen zugeordneten Fenstern wiedergegeben, bei eingeklappten Fenstern werden die Verfahrensparameter in Kurzform wiedergegeben, bei ausgeklappten Fenstern werden die Verfahrensparameter in Langform wiedergegeben. Je nach dem gewünschten Informationsgehalt kann ein Benutzer vom Messsystem Fenster ein- und aufklappen.

Die Erfindung betrifft auch ein Messsystem zur Durchführung des Verfahrens, wobei die Verfahrensparameter in Gattungen eingeteilt sind, eine erste Gattung von Verfahrensparametern umfasst mehrere für die Messung der physikalischen Messgrösse benötigte Messeinheiten, eine zweite Gattung umfasst mindestens eine Erfassung der physikalischen Messgrösse als Messsignal, eine dritte Gattung umfasst mindestens eine Auswertung vom Messsignal zu einem Messwert, eine vierte Gattung umfasst mindestens eine Darstellung vom Messsignal oder Messwert, und eine fünfte Gattung umfasst mindestens eine Weiterverarbeitung vom Messsignal oder Messwert; wobei jede Gattung eine eineindeutige Indexnummer hat; und wobei das Computerprogrammprodukt auf der graphischen Benutzeroberfläche in mindestens zwei Spalten die Fenster von Verfahrensparametern wiedergibt, welche die gleiche Indexnummer haben.

Eine solche gattungsspezifische Wiedergabe von Verfahrensparametern ist übersichtlich und verständlich. Vorzugsweise ist es dadurch auf einfache Art und Weise möglich durch Aktivierung und Deaktivierung einer Spalte, den in den Fenstern dargestellten Informationsgehalt gattungsspezifisch zu steuern. In einer deaktivierten Spalte sind die Fenster eingeklappt und die Verfahrensparameter werden in Kurzform wiedergegeben, in einer aktivierten Spalte sind die Fenster ausgeklappt und die Verfahrensparameter werden in Langform wiedergegeben. Je nach dem gewünschten Informationsgehalt kann ein Benutzer vom Messsystem Spalten aktivieren und deaktivieren.

### Kurze Beschreibung der Zeichnungen

Im Folgenden wird die Erfindung beispielhaft unter Beizug der Figuren näher erklärt. Es zeigen
- Fig. 1: ein Blockdiagramm mit Verfahrensparametern eines Messsystems;
- Fig. 2: eine schematische Ansicht einer elektronischen Recheneinheit zur Ausführung eines Computerprogramproduktes zur Einstellung und Überwachung von Verfahrensparametern des Messsystems nach Fig. 1;
- Fig. 3: eine schematische Ansicht einer ersten beispielhaften Ausführungsform einer graphischen Benutzeroberfläche eines Computerprogrammproduktes zur Einstellung und Überwachung von Verfahrensparametern des Messsystems nach Fig. 1;
- Fig. 4: eine schematische Ansicht einer noch deaktivierten ersten Spalte der Ausführungsform einer graphischen Benutzeroberfläche nach Fig. 3;
- Fig. 5: eine schematische Ansicht der aktivierten ersten Spalte der Ausführungsform einer graphischen Benutzeroberfläche nach Fig. 4;
- Fig. 6: eine schematische Ansicht eines noch deaktivierten Fensters der aktivierten ersten Spalte der Ausführungsform einer graphischen Benutzeroberfläche nach Fig. 5;
- Fig. 7: eine schematische Ansicht des aktivierten Fensters der aktivierten ersten Spalte der Ausführungsform einer graphischen Benutzeroberfläche nach Fig. 6;
- Fig. 8: eine schematische Ansicht einer noch deaktivierten vierten Spalte der Ausführungsform einer graphischen Benutzeroberfläche nach Fig. 7;
- Fig. 9: eine schematische Ansicht der aktivierten vierten Spalte der Ausführungsform einer graphischen Benutzeroberfläche nach Fig. 8; und
- Fig. 10: eine schematische Ansicht einer zweiten beispielhaften Ausführungsform einer graphischen Benutzeroberfläche eines Computerprogrammproduktes zur Einstellung und Überwachung von Verfahrensparametern des Messsystems nach Fig. 1.

### Wege zur Ausführung der Erfindung

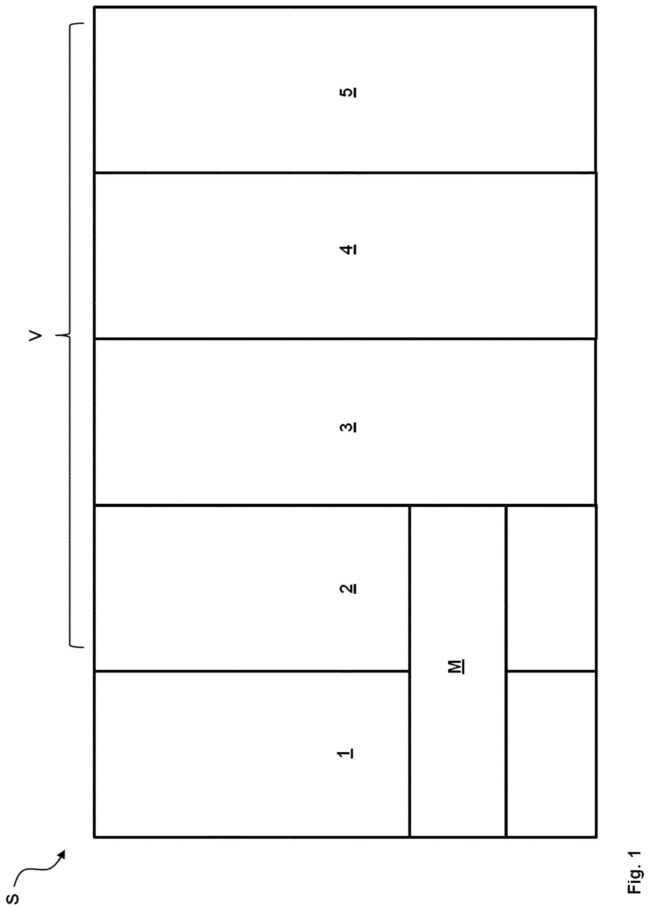

Fig. 1 zeigt Verfahrensparameter eines Messsystems S. Mit dem Messsystem S wird mindestens eine physikalische Messgrösse M gemessen. Die physikalische Messgrösse M kann eine Kraft, ein Druck, eine Masse, eine Temperatur, usw. sein. Die Verfahrensparameter sind in mehrere Gattungen eigeteilt.

Eine erste Gattung von Verfahrensparametern umfasst mindestens eine für die Messung der physikalischen Messgrösse M benötigte Messeinheit 1. Jede Messeinheit 1 weist mehrere Übertragungsglieder wie mindestens ein Sensor, mindestens ein Messkabel und mindestens eine Auswerteeinheit auf. Eine Messeinheit 1 misst mindestens eine physikalische Messgrösse M, sie kann aber auch mehr als eine physikalische Messgrösse M messen. Die Messeinheit 1 und ihre Übertragungsglieder werden auch Mess-Setup genannt.

Eine zweite, dritte, vierte und fünfte Gattung von Verfahrensparametern umfasst Verfahrensschritte eines Verfahrens V. So umfasst eine zweite Gattung von Verfahrensparametern den Verfahrensschritt von mindestens einer Erfassung 2 einer physikalischen Messgrösse M als Messsignal. Eine dritte Gattung von Verfahrensparametern umfasst den Verfahrensschritt von mindestens einer Auswertung 3 vom Messsignal zu mindestens einem Messwert. Die Auswertung 3 wird auch Data Processing genannt. Eine vierte Gattung von Verfahrensparametern umfasst den Verfahrensschritt von mindestens einer Darstellung 4 vom Messsignal oder Messwert. Die Darstellung 4 vom Messsignal oder Messwert kann in Tabellenform, in graphischer Form, usw. erfolgen. Und eine fünfte Gattung von Verfahrensparametern umfasst den Verfahrensschritt von mindestens einer Weiterverarbeitung 5 vom Messsignal oder Messwert. Die Weiterverarbeitung 5 vom Messsignal oder Messwert kann eine Verwendung als Auslösesignal für einen Folgeprozess wie eine Gutteil/Schlechtteil-Ermittlung bei einem Spritzgiessprozess, eine Datenübermittlung zu einem räumlich entfernten Speicherplatz, eine Datenübermittlung zu einem räumlich entfernten Datenprozessor, usw. sein.

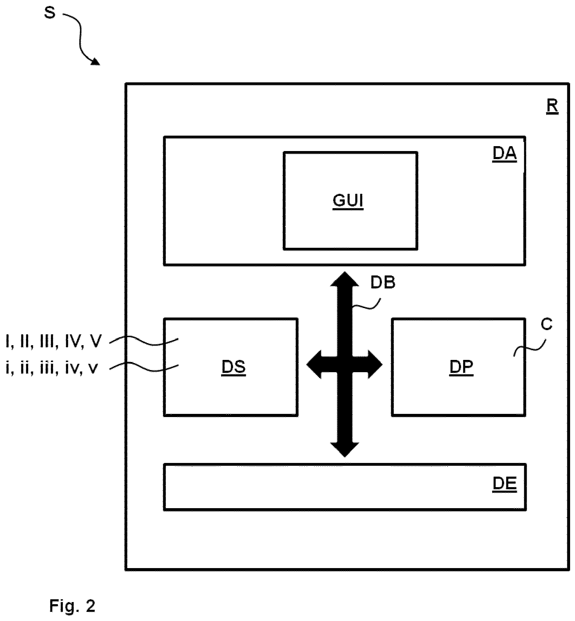

Fig. 2 zeigt eine schematische Ansicht einer elektronischen Recheneinheit R zur Ausführung eines Computerprogramproduktes C des Messsystems S. Die elektronische Recheneinheit R weist als Komponenten mindestens einen Datenspeicher DS, mindestens einen Datenprozessor DP, mindestens eine Dateneingabeeinheit DE, mindestens eine Datenausgabeeieinheit DA und mindestens einen Datenbus DB auf. Über den Datenbus DB werden beliebige Daten zwischen den Komponenten ausgetauscht.

Dateneingabeeinheit DE und Datenausgabeeinheit DA können separate Komponenten wie eine Tastatur, eine Computermaus, ein Bildschirm, eine serielle Schnittstelle, usw. sein, sie können aber auch in einer Komponente integriert sein wie ein Berührungsbildschirm. Die Datenausgabeeinheit DA weist einen mindestens einen Bildschirm oder Berührungsbildschirm mit einer graphischen Benutzeroberfläche GUI auf.

So ist mindestens ein im Datenspeicher DS als Daten gespeichertes Computerprogrammprodukt C als Daten über den Datenbus DB aus dem Datenspeicher DS in den Datenprozessor DP ladbar. Das geladene Computerprogrammprodukt C wird vom Datenprozessor DP ausgeführt.

Das Computerprogrammprodukt C kann über den Datenbus DB von einer Dateneingabeeinheit DE wie einer seriellen Schnittstelle sowohl Daten von mindestens einem Messsignal als auch Daten von mindestens einem Messwert einlesen. Das Computerprogrammprodukt C kann also die Auswertung 3 vom Messsignal zu einem Messwert durchführen, es kann auch die Darstellung 4 vom Messsignal und vom Messwert durchführen, und es kann die Weiterverarbeitung 5 vom Messsignal oder Messwert durchführen. Die Auswertung 3 vom Messsignal zu einem Messwert, die Darstellung 4 vom Messsignal und vom Messwert und die Weiterverarbeitung 5 vom Messsignal und vom Messwert kann/können aber auch in einer räumlich separaten Auswerteeinheit erfolgen.

Die Verfahrensparameter sind als Daten im Datenspeicher DS gespeichert und aus dem Datenspeicher DS abrufbar.
- Die Gattungen sind indexiert. Vorzugsweise hat jede Gattung eine eineindeutige Indexnummer. Die Indexnummer der ersten Gattung ist gleich I, die Indexnummer der zweiten Gattung ist gleich II, die Indexnummer der dritten Gattung ist gleich III, die Indexnummer der vierten Gattung ist gleich IV und die Indexnummer der fünften Gattung ist gleich V. Die Indexnummer ist eine Eigenschaft der Verfahrensparameter und wird mit den Daten der Verfahrensparameter im Datenspeicher DS gespeichert und ist aus dem Datenspeicher DS abrufbar.
- Die Verfahrensparameter einer Messeinheit 1 sind miteinander verknüpft. Vorzugsweise hat jede Messeinheit 1 eine eineindeutige Identifikationsnummer, über welche Identifikationsnummer die Verfahrensparameter miteinander verknüpft sind. Die Identifikationsnummer einer ersten Messeinheit ist gleich i, die Identifikationsnummer einer zweiten Messeinheit gleich ii, die Identifikationsnummer einer dritten Messeinheit ist gleich iii, die Identifikationsnummer einer vierten Messeinheit ist gleich iv, und die Identifikationsnummer einer fünften Messeinheit ist gleich v, usw. Beispielsweise ist die Identifikationsnummer eine Eigenschaft der Verfahrensparameter und wird mit den Daten der Verfahrensparameter im Datenspeicher DS gespeichert und ist aus dem Datenspeicher DS abrufbar. Die Verfahrensparameter einer Messeinheit 1 lassen sich von links nach rechts oder von rechts nach links miteinander verknüpfen. Bei einer Verknüpfung der Verfahrensparameter einer Messeinheit 1 von links nach rechts werden zwei oder mehr Verfahrensparameter in einer kausalen und zeitlichen Abfolge der Verfahrensschritte Erfassung 2, Auswertung 3, Darstellung 4 und Weiterverarbeitung 5 miteinander verknüpft. Bei einer Verknüpfung der Verfahrensparameter einer Messeinheit 1 von rechts nach links hingegen werden zwei oder mehr Verfahrensparameter in einer nichtkausalen und nichtzeitlichen Abfolge von Verfahrensschritten miteinander verknüpft, beispielsweise wird eine Darstellung 4 mit einer zeitlich früher erfolgten Auswertung 3 verknüpft.

Das Computerprogrammprodukt C kann Daten von Verfahrensparametern des Messsystems S einlesen. Das Computerprogrammprodukt C kann im Datenspeicher DS als Daten gespeicherte Verfahrensparameter über den Datenbus DB aus dem Datenspeicher DS in den Datenprozessor DP einlesen.

Das Computerprogrammprodukt C kann Verfahrensparameter des Messsystems S einstellen und überwachen. Eine Einstellung eines Verfahrensparameters bedeutet eine Zustandsänderung des Verfahrensparameters. Beispielsweise wird eine Messung durch Eingabe eines Steuersignals für den Verfahrensschritt Erfassung 2 der physikalischen Messgrösse M gestartet oder beendet. Eine Überwachung eines Verfahrensparameters bedeutet eine Darstellung 4 vom zeitlichen Verlauf des Verfahrensparameters. Beispielsweise wird ein Messsignal oder ein Messwert detailliert dargestellt, in dem ein zeitlicher Verlauf vom Messsignal oder Messwert graphisch dargestellt wird. Das Computerprogrammprodukt C kann Daten eines Steuersignals über den Datenbaus DB an die Datenausgabeeinheit DA wie eine serielle Schnittstelle übermitteln. Von dort werden die Daten des Steuersignals an eine Messeinheit 1 wie einen Sensor oder eine Auswerteeinheit übermittelt.

Das Computerprogrammprodukt C gibt auf der graphischen Benutzeroberfläche GUI Informationen über das Messsystem S aus. Dazu weist die graphische Benutzeroberfläche GUI Spalten mit Fenstern auf. Das Computerprogrammprodukt C kann über den Datenbus DB Daten von Informationen an die graphische Benutzeroberfläche GUI übermitteln und in den Spalten mit Fenstern als Informationen ausgeben.

Das Computerprogrammprodukt C ist über die graphische Benutzeroberfläche GUI bedienbar. Eine Bedienung des Computerprogrammproduktes C bedeutet eine Eingabe von Steuersignalen. In den Spalten mit Fenstern sind Steuersignale zur Einstellung und Überwachung von Verfahrensparametern eingebbar. So kann die Dateneingabeeinheit DE eine Computermaus sein, welche einen Cursor U auf der graphischen Benutzeroberfläche GUI bewegt. Durch Bewegung des Cursors U auf der graphischen Benutzeroberfläche GUI wird eine Spalte mit Fenstern oder ein Fenster ausgewählt. Durch Aktivierung einer ausgewählten Spalte mit Fenstern oder eines ausgewählten Fensters über dem sich der Cursor befindet, wird ein Steuersignal eingegeben. Die Aktivierung kann durch Drücken einer Taste der Computermaus erfolgen, sobald sich der Cursor über einer ausgewählten Spalte mit Fenstern oder über einem ausgewählten Fenster befindet. Daten zur Bewegung des Cursors und zur Aktivierung der Spalte mit Fenstern oder des Fensters werden von der Dateneingabeeinheit DE über den Datenbus DB an die Datenausgebeeinheit DA der graphischen Benutzeroberfläche GUI und das Computerprogrammprodukt C übermittelt. Die Bewegung des Cursors und die Aktivierung der ausgewählten Spalte mit Fenstern oder des ausgewählten Fensters über dem sich der Cursor befindet, können aber auch durch händisches Wischen über einen Berührungsbildschirm einer graphischen Benutzeroberfläche GUI und durch händisches Drücken auf den Berührungsbildschirm der graphischen Benutzeroberfläche GUI erfolgen.

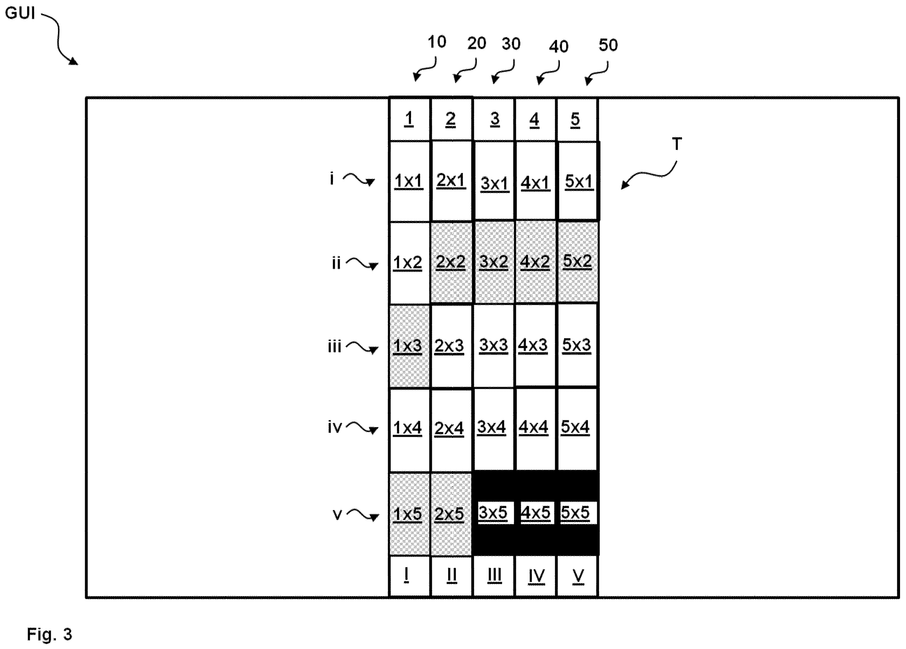

Die Fig. 3 bis 10 zeigen zwei beispielhafte Ausführungsformen einer graphischen Benutzeroberfläche GUI des Computerprogrammproduktes C zur Einstellung und Überwachung von Verfahrensparametern des Messsystems S. Die graphische Benutzeroberfläche GUI weist beispielsweise fünf Spalten 10 bis 50, 10', 40' mit Fenstern auf. Das Messsystem S führt beispielsweise mit fünf Messeinheiten 1 zeitgleich fünf verschiedene Messungen von physikalischen Messgrössen M durch. Jede Messeinheit 1 kann zeitgleich mindestens eine physikalische Messgrösse M messen. Jeder Verfahrensparameter einer jeden der Messungen wird in einem ihm zugeordneten Fenster auf der graphischen Benutzeroberfläche GUI dargestellt. Vorzugsweise sind in jeder Spalte 10 bis 50, 10', 40' die Fenster von Verfahrensparametern ein und derselben Gattung dargestellt. Vorzugsweise stellt das Computerprogrammprodukt C in jeder Spalte 10 bis 50, 10', 40' die Fenster von Verfahrensparametern dar, welche die gleiche Indexnummer I bis V haben.

Fig. 3 zeigt eine erste Ausführungsform der graphischen Benutzeroberfläche GUI.
- Eine erste Spalte 10 stellt Verfahrensparameter der ersten Gattung mit fünf Messeinheiten 1 dar. Jede Messeinheit 1 hat eine eineindeutige Identifikationsnummer i, ii, iii, iv und v. Die erste Spalte 20 ist deaktiviert und weist fünf eingeklappte Fenster 1x1 bis 1x5 auf. Jedes eingeklappte Fenster 1x1 bis 1x5 stellt in Kurzform Messeinheiten 1 einer der fünf Messungen dar.
- Eine zweite Spalte 20 stellt Verfahrensparameter der zweiten Gattung mit einer Erfassung 2 der physikalischen Messgrössen M in fünf Messungen als Messsignale dar. Die zweite Spalte 20 ist deaktiviert und weist fünf eingeklappte Fenster 2x1 bis 2x5 auf. Jedes eingeklappte Fenster 2x1 bis 2x5 stellt in Kurzform in einer von fünf Messungen die Erfassung 2 der zu messenden physikalischen Messgrösse M als Messsignal dar.

- Eine dritte Spalte 30 stellt für die fünf Messungen Verfahrensparameter der dritten Gattung der Auswertung 3 vom Messsignal zu einem Messwert dar. Die fünfte Spalte 30 ist deaktiviert und weist fünf eingeklappte Fenster 3x1 bis 3x5 auf. Jedes eingeklappte Fenster 3x1 bis 3x5 stellt für die fünf Messungen in Kurzform die Auswertung 3 vom Messsignal zu einem Messwert dar.
- Eine vierte Spalte 40 stellt für die fünf Messungen Verfahrensparameter der vierten Gattung der Darstellung 4 vom Messsignal oder Messwert dar. Die vierte Spalte 40 ist deaktiviert und weist fünf eingeklappte Fenster 4x1 bis 4x5 auf. Jedes eingeklappte Fenster 4x1 bis 4x5 stellt für die fünf Messungen in Kurzform die Darstellung 4 vom Messsignal oder Messwert dar.
- Eine fünfte Spalte 50 stellt für die fünf Messungen Verfahrensparameter der fünften Gattung der Weiterverarbeitung 5 vom Messsignal oder Messwert dar. Die fünfte Spalte 50 ist deaktiviert und weist fünf eingeklappte Fenster 5x1 bis 5x5 auf. Jedes eingeklappte Fenster 5x1 bis 5x5 stellt für die fünf Messungen in Kurzform die Weiterverarbeitung 5 vom Messsignal oder Messwert dar.

Eine deaktivierte Spalte mit eingeklappten Fenstern verwendet genau den Raum auf der graphischen Benutzeroberfläche GUI, um die zugeordneten Verfahrensparameter in den eingeklappten Fenstern in Kurzform wiederzugeben. Vorzugsweise verwendet eine Spalte mit eingeklappten Fenstern einen minimalen Raum von weniger als 5% der graphischen Benutzeroberfläche GUI. Eine Wiedergabe in Kurzform eines Verfahrensparameters ist eine abstrakte Wiedergabe eines Verfahrensparameters wie ein Piktogramm oder eine Buchstaben- und Zahlenfolge. So kann eine Messeinheit 1 mit einem Drucksensor in Kurzform als "Typ 603C" oder "MU-A-A111-Slot_1" wiedergegeben werden. Eine Erfassung 2 einer physikalischen Messgrösse M kann in Kurzform als "Drucksignal 2" oder "Beschleunigungssignal 5" wiedergegeben werden. Eine Auswertung 3 vom Messsignal zu einem Messwert kann in Kurzform als "Messwert 3" oder "OK" als Abkürzung für "vorhanden" wiedergegeben werden. Eine Darstellung 4 von einem Messsignal oder Messwert kann in Kurzform als "Graph_1" oder "Messungenauigkeit 2" wiedergegeben werden. Und eine Weiterverarbeitung 5 von einem Messsignal oder Messwert kann in Kurzform als "Auslösesignal 2" oder "OK" Abkürzung für "Datenübermittlung erfolgt" wiedergegeben werden.

Die Ausführungsform der graphischen Benutzeroberfläche GUI nach Fig. 3 weist fünf deaktivierte Spalten 10 bis 50 mit 25 eingeklappten Fenstern 1x1 bis 5x5 auf. Beispielsweise verwenden die 25 eingeklappten Fenster 1x1 bis 5x5 weniger als 25% der graphischen Benutzeroberfläche GUI.

Eine Statusmitteilung T der Verfahrensparameter des Messsystems S kann in der graphischen Benutzeroberfläche GUI wiedergegeben werden. Die Statusmitteilung T ist zuschaltbar, sie kann zu- und abgeschaltet werden. Im Ausführungsform der graphischen Benutzeroberfläche GUI nach Fig. 3 ist die Statusmitteilung T zugeschaltet.
- Die Statusmitteilung T der Messeinheiten 1 gibt beispielsweise an, ob eine Messung einer physikalischen Messgrösse M aktuell stattfindet oder nicht.
- Die Statusmitteilung T der Erfassung 2 der physikalischen Messgrössen M als Messsignale gibt beispielsweise an, ob eine physikalische Messgrösse M aktuell als Messsignale erfasst wird oder nicht.
- Die Statusmitteilung T der Auswertung 3 vom Messsignal zu einem Messwert gibt beispielsweise an, ob ein ausgewerteter Messwert aktuell innerhalb von vordefinierten Grenzwerten liegt oder nicht.
- Die Statusmitteilung T der Darstellung 4 vom Messsignal oder Messwert gibt beispielsweise an, ob ein Messsignal oder Messwert aktuell darstellbar ist oder nicht.
- Die Statusmitteilung T der Weiterverarbeitung 5 vom Messsignal oder Messwert gibt beispielsweise an, ob ein Messsignal oder Messwert aktuell weiterverarbeitet wird oder nicht.

Im Ausführungsform der graphischen Benutzeroberfläche GUI nach Fig. 3 ist die Statusmitteilung T graphisch in den Fenstern 1x5 bis 5x5 in Ampelfarben weiss, grau und schwarz realisiert.
- In dem Beispiel finden für die Messeinheiten 1 mit den Identifikationsnummern i, ii und iv aktuell keine Messung einer physikalischen Messgrösse M statt. Die Fenster 1x1 bis 5x1 der Identifikationsnummer i, die Fenster 1x2, 2x3 bis 5x3 der Identifikationsnummer ii und die Fenster 1x4 bis 5x4 der Identifikationsnummer iv sind weiss hinterlegt, um wiederzugeben, dass aktuell keine Messungen stattfinden.
- In dem Beispiel finden für die Messeinheiten 1 mit den Identifikationsnummern iii und v aktuell Messungen einer physikalischen Messgrösse M statt. Die Fenster 1x3 bis 2x2 der Identifikationsnummer iii und die Fenster 1x5 bis 2x5 der Identifikationsnummer v sind grau hinterlegt, um wiederzugeben, dass Messungen aktuell stattfinden und dass Messgrössen M als Messsignale aktuell erfasst werden.
- In dem Beispiel liegt ein ausgewerteter Messwert mit der Identifikationsnummer iii aktuell innerhalb von vordefinierten Grenzwerten und kann dargestellt werden und kann weiterarbeitet werden. Die Fenster 3x2 bis 5x2 der Identifikationsnummer iii sind grau hinterlegt, um wiederzugeben, dass hier die Messung der physikalischen Messgrösse M ordnungsgemäss erfolgt.
- In dem Beispiel liegt ein ausgewerteter Messwert mit der Identifikationsnummer v aktuell ausserhalb von vordefinierten Grenzwerten und kann auch nicht dargestellt werden und wird auch nicht weiterarbeitet. Die Fenster 3x5 bis 5x5 der Identifikationsnummer v sind schwarz hinterlegt, um wiederzugeben, dass hier die Messung der physikalischen Messgrösse M nicht ordnungsgemäss erfolgt.

Bei Kenntnis der vorliegenden Erfindung kann der Fachmann andere Statusmitteilungen wie eine Verfügbarkeit einer Messeinheit, usw. realisieren. Auch kann der Fachmann eine Statusmitteilung durch andere graphische Mittel und/oder akustisch wiedergeben.

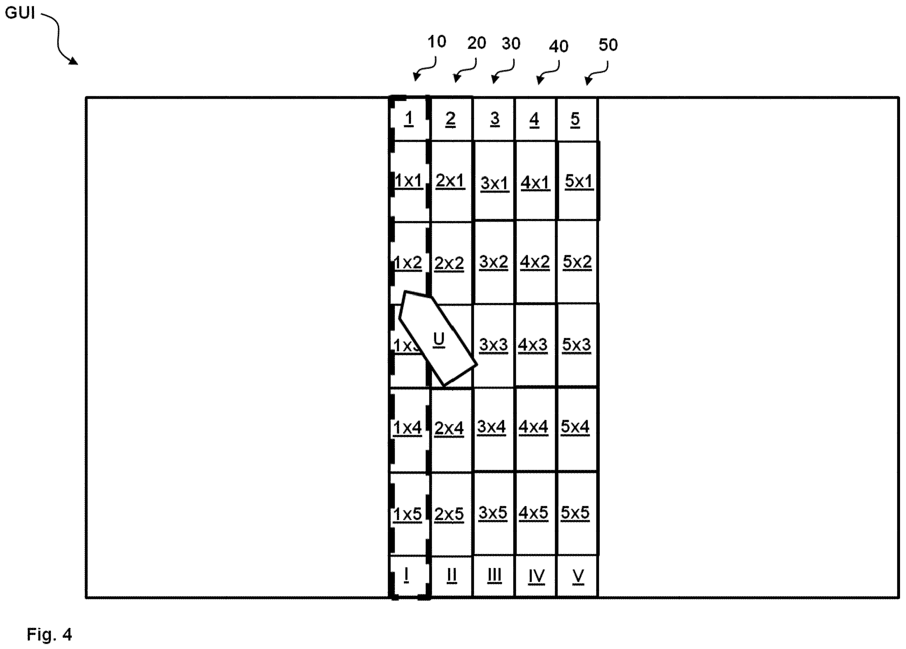

Fig. 4 zeigt die graphische Benutzeroberfläche GUI in der Ausformungsform nach Fig. 3 mit einer deaktivierten ersten Spalte 10. Im Vergleich zu Fig. 3 ist in Fig. 4 ein Cursor U über die erste Spalte 10 bewegt worden. Die deaktivierte erste Spalte 10 soll aktiviert werden, was durch eine fett gestrichelte Umrandung der ersten Spalte 10 gekennzeichnet ist.

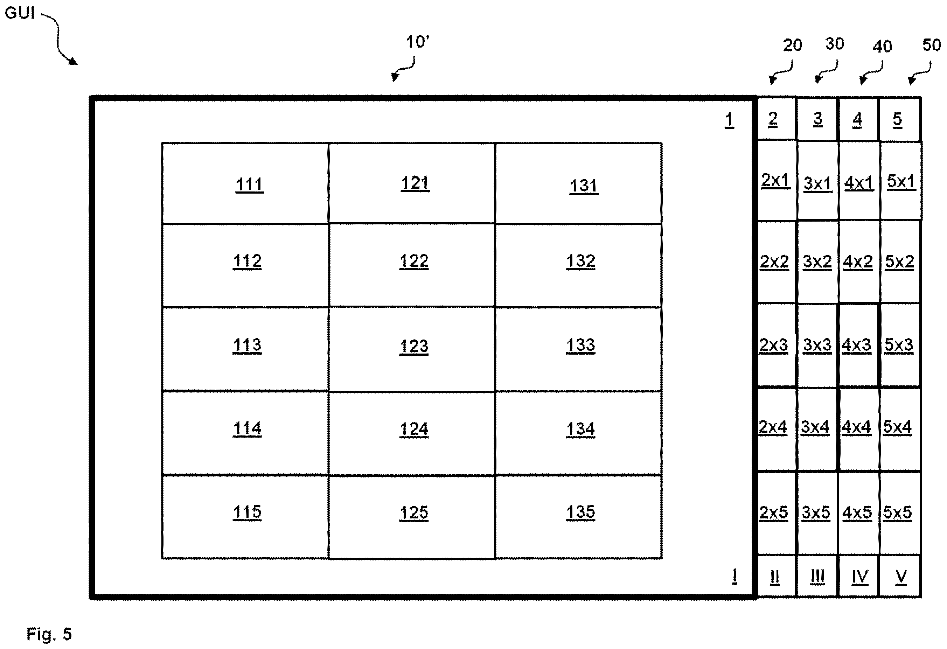

Fig. 5 zeigt die graphische Benutzeroberfläche GUI in der Ausformungsform nach Fig. 4 mit der aktivierten ersten Spalte 10'. Die Aktivierung der ersten Spalte 10' ist durch eine fett durchgezogene Umrandung der ersten Spalte 10' gekennzeichnet. Eine aktivierte erste Spalte 10' stellt die für die fünf Messungen benötigten Messeinheiten 1 dar. Durch die Aktivierung der ersten Spalte 10' sind die Fenster 111 bis 135 der ersten Spalte 10' aufgeklappt. Beispielsweise weist die aktivierte erste Spalte 10' drei Unterspalten mit aufgeklappten Fenstern 111 bis 115 für Sensoren, mit aufgeklappten Fenstern 121 bis 125 für Messkabel und mit aufgeklappten Fenstern 131 bis 135 für Auswerteeinheiten auf.

Eine aktivierte Spalte mit aufgeklappten Fenstern verwendet genau den Raum auf der graphischen Benutzeroberfläche GUI, um den zugeordneten Verfahrensparameter in Langform darzustellen. Vorzugsweise verwendet eine aktivierte Spalte mit aufgeklappten Fenstern einen maximalen Raum von mehr als 50% der graphischen Benutzeroberfläche GUI. Eine Wiedergabe in Langform eines Verfahrensparameters ist eine detaillierte Wiedergabe. So kann eine Messeinheit 1 mit einem Drucksensor und einem Thermoelement in Langform ein Auszug aus einem Datenblatt des Drucksensors mit detaillierter Bezeichnung der Schnittstellen und Bezeichnung der gemessenen physikalischen Messgrössen "Zylinderdruck 3", "Zylindertemperatur 3" wiedergegeben werden. Eine Erfassung 2 einer physikalischen Messgrösse M kann in Langform als "maximales Drucksignal 2 = 218bar" oder "Beschleunigungssignal 5 = 1.5g" wiedergegeben werden. Eine Auswertung 3 vom Messsignal zu einem Messwert kann in Langform als "Messungenauigkeit 2 = 5.3%" oder als Aussage "Messwert 3 ist innerhalb der eingestellten Grenzwerte", usw. wiedergegeben werden. Eine Darstellung 4 von einem Messsignal oder Messwert kann in Langform als graphische Wiedergabe vom zeitlichen Verlauf eines "Drucksignals 2" wiedergegeben werden. Und eine Weiterverarbeitung 5 von einem Messsignal oder Messwert kann in Langform als Aussage "übermittelte Datenmenge = 9.2 MB/s" wiedergegeben werden.

Für den Fachmann ist es bei Kenntnis der vorliegenden Erfindung verständlich, dass eine Deaktivierung einer aktivierten Spalte analog zur Aktivierung einer deaktivierten spalte erfolgt. So wird eine aktivierte Spalte durch Bewegung eines Cursors U deaktiviert und Fenster der deaktivierten Spalte werden eingeklappt.

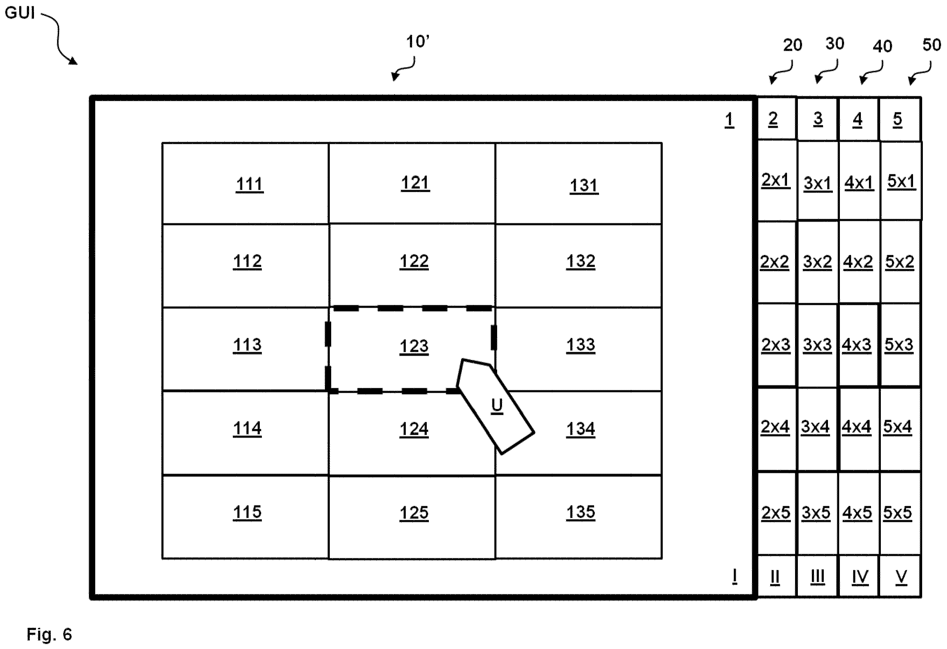

Fig. 6 zeigt die graphische Benutzeroberfläche GUI in der Ausformungsform nach Fig. 5 mit einem noch deaktivierten Fenster 123 der aktivierten ersten Spalte 10'. Im Vergleich zu Fig. 5 ist in Fig. 6 ein Cursor U über das deaktivierte Fenster 123 bewegt worden. Das deaktivierte Fenster 123 soll aktiviert werden, was durch eine fett gestrichelte Umrandung vom Fenster 123 gekennzeichnet ist.

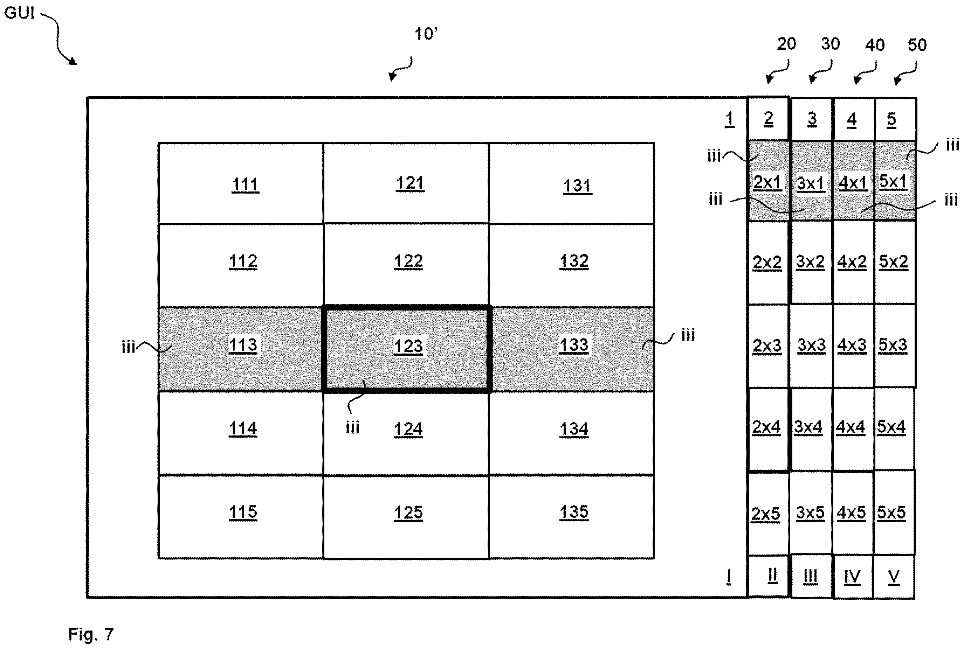

Fig. 7 zeigt die graphische Benutzeroberfläche GUI in der Ausformungsform nach Fig. 6 mit einem aktivierten Fenster 123 der aktivierten ersten Spalte 10'. Die Aktivierung vom Fenster 123 ist durch eine fett durchgezogene Umrandung vom Fenster 123 gekennzeichnet. Durch die Aktivierung vom Fenster 123 sind die Fenster 113, 123 und 133 in der ersten Spalte 10', das Fenster 2x1 der zweiten Spalte 20, das Fenster 3x1 in der dritten Spalte 30, das Fenster 4x1 in der vierten Spalte 40 und das Fenster 5x1 in der fünften Spalte 50 markiert. Die Markierung der Fenster 113, 123, 133, 2x1, 3x1, 4x1 und 5x1 ist durch eine graue Schraffur gekennzeichnet. Die Markierung ist für Benutzer vom Messsystem S auf der graphischen Benutzeroberfläche GUI gut erkennbar. Die Markierung gibt an, dass diese Verfahrensparameter zu ein und derselben Messeinheit 1 gehören. Vorzugsweise markiert das Computerprogrammprodukt C alle Fenster von Verfahrensparametern aus, welche zur gleichen Messeinheit 1 wie der Verfahrensparameter vom aktivierten Fenster 123 und somit die gleiche Identifikationsnummer iii wie der Verfahrensparameter vom aktivierten Fenster 123 haben. So stellt Fenster 113 in Langform den von der Messeinheit 1 verwendeten Sensor dar. Fenster 123 stellt in Langform das von der Messeinheit 1 verwendete Messkabel dar. Fenster 133 stellt in Langform die von der Messeinheit 1 verwendete Auswerteeinheit dar. Für die Messeinheit 1 stellt das Fenster 2x1 in Kurzform den Verfahrensschritt der Erfassung 2 der physikalischen Messgrösse M als Messsignal dar. Für die Messeinheit 1 stellt das Fenster 3x1 in Kurzform den Verfahrensschritt der Auswertung 3 vom Messsignal zu einem Messwert dar. Für die Messeinheit 1 stellt das Fenster 4x1 in Kurzform den Verfahrensschritt der Darstellung 4 vom Messsignal oder Messwert dar. Für die Messeinheit 1 stellt das Fenster 5x1 in Kurzform den Verfahrensschritt der Weiterverarbeitung 5 vom Messsignal oder Messwert dar.

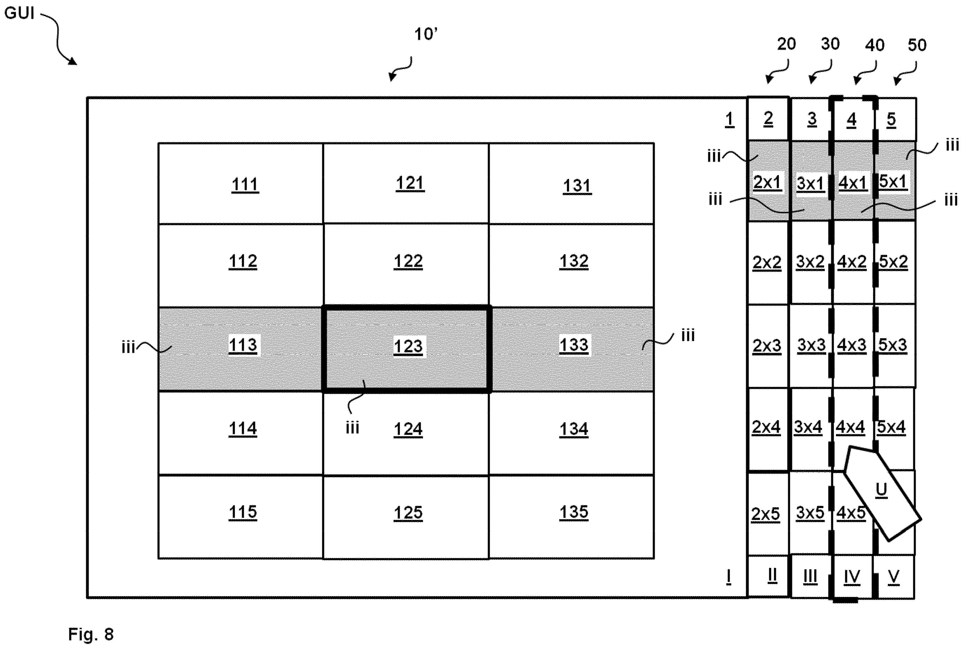

Fig. 8 zeigt die graphische Benutzeroberfläche GUI in der Ausformungsform nach Fig. 7 mit einer noch deaktivierten vierten Spalte 40. Im Vergleich zu Fig. 7 ist in Fig. 8 ein Cursor U über die vierte Spalte 40 bewegt worden. Die noch deaktivierte vierte Spalte 40 soll aktiviert werden, was durch eine fett gestrichelte Umrandung der vierten Spalte 40 gekennzeichnet ist.

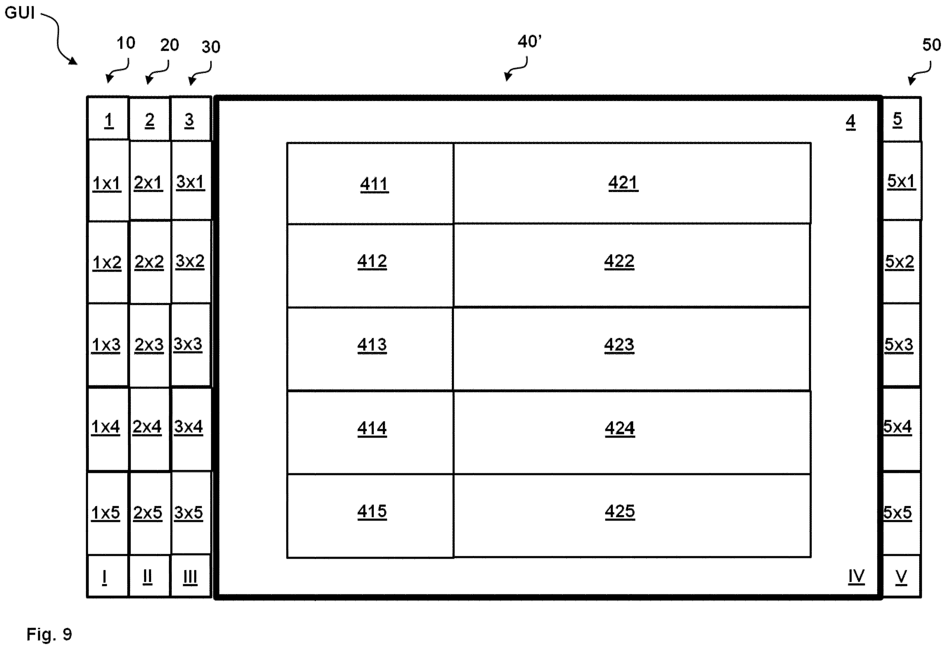

Fig. 9 zeigt die graphische Benutzeroberfläche GUI in der Ausformungsform nach Fig. 8 mit der aktivierten vierten Spalte 40'. Die Aktivierung der vierten Spalte 40' ist durch eine fett durchgezogene Umrandung der vierten Spalte 40' gekennzeichnet. Eine aktivierte vierte Spalte 40' stellt die Darstellung 4 von einem Messsignal oder Messwert der fünf Messungen dar. Durch die Aktivierung der vierten Spalte 40' sind Fenster 411 bis 425 der vierten Spalte 40' aufgeklappt. Durch die Aktivierung der vierten Spalte 40' sind nicht nur die Fenster 111 bis 135 der ersten aktivierten Spalte 10' eingeklappt, sondern auch die erste Spalte 10 ist deaktiviert. Beispielsweise weist die aktivierte vierte Spalte 40' zwei Unterspalten mit aufgeklappten Fenstern 411 bis 415 für eine detaillierte Wiedergabe vom Messsignal oder Messwert, und mit aufgeklappten Fenstern 421 bis 425 für eine graphische Wiedergabe vom zeitlichen Verlauf vom Messsignal oder Messwert auf.

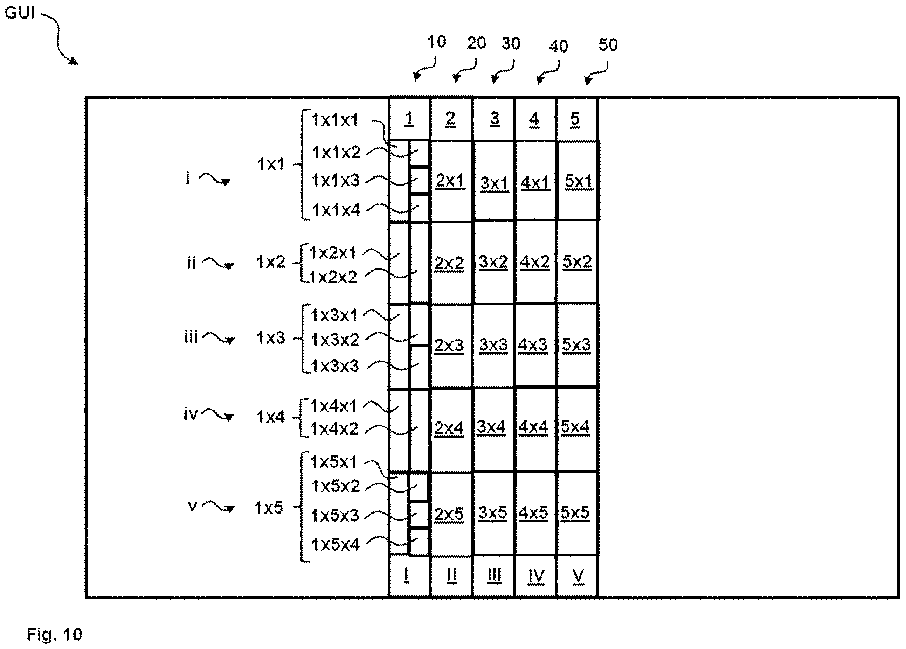

Fig. 10 zeigt eine zweite Ausführungsform der graphischen Benutzeroberfläche GUI. Die Ausführungsform nach Fig. 10 entspricht weitgehend derjenigen nach Fig. 3, so dass auf deren Beschreibung verwiesen wird im Folgenden nur Unterschiede zwischen diesen beiden Ausführungsformen erläutert werden.

So weist die graphischen Benutzeroberfläche GUI nach Fig. 10 eine erste Spalte 10 mit eingeklappten Fenstern 1x1 bis 1x5 auf, welche eingeklappten Fenster 1x1 bis 1x5 eine Feinstruktur 1x1x1 bis 1x5x4 besitzen. Die Feinstruktur gibt den Verfahrensparameter der für die Messung der physikalischen Messgrösse benötigten Messeinheit 1 trotz des minimalen Raums der eingeklappten Fenster in differenzierter Kurzform wieder. Eine Wiedergabe in differenzierter Kurzform der Messeinheit 1 ist eine abstrakte Wiedergabe der Messeinheit 1 durch ein Piktogramm oder eine Buchstaben- und Zahlenfolge, wobei zusätzlich noch eine weitere Information wie eine Wiedergabe von unterschiedlichen Messkanälen oder von unterschiedlichen Messbereichen der Messeinheit 1 erfolgt.
- Im Beispiel wird eine Messeinheit 1 mit der Identifikationsnummer i, v mit einem Kraftsensor und drei Messkanälen pro Kraftsensor durch die Feinstruktur 1x1x1 bis 1x1x4 und 1x5x1 bis 1x5x4 wiedergegeben. Eine erste Feinstruktur 1x1x1, 1x5x1 gibt den Kraftsensor in Kurzform als "Typ 9047C", "Typ 9047C" wieder. Eine weitere Feinstruktur 1x1x2 bis 1x1x4, 1x5x2 bis 1x5x4 gibt drei Messkanäle jedes Kraftsensors in Kurzform als "Kanal X", "Kanal Y" und "Kanal Z" wieder.
- Im Beispiel wird eine Messeinheit 1 mit der Identifikationsnummer ii, iv mit einem Thermoelement und einem Messkanal pro Thermoelement durch die Feinstruktur 1x2x1 und 1x2x2 und 1x4x1 und 1x4x2 wiedergegeben. Eine erste Feinstruktur 1x2x1, 1x4x1 gibt das Thermoelement in Kurzform als "Typ K" wieder. Eine weitere Feinstruktur 1x2x1, 1x4x2 gibt den Messkanal jedes Thermoelements in Kurzform als "Kanal K" wieder.
- Im Beispiel wird eine Messeinheit 1 mit der Identifikationsnummer iii mit einem Drucksensor und zwei Messbereichen durch die Feinstruktur 1x3x1 bis 1x3x3 wiedergegeben. Eine erste Feinstruktur 1x3x1 gibt den Kraftsensor in Kurzform als "Typ 603C" wieder. Eine weitere Feinstruktur 1x3x2 bis 1x3x3 gibt zwei Messbereiche des Drucksensors in Kurzform als "Bereich 1" und "Bereich 2" wieder.

Bei Kenntnis der vorliegenden Erfindung kann der Fachmann andere oder alle Verfahrensparameter in ihnen zugeordneten Fenstern mit einer Feinstruktur wiedergeben.

Auch ist in der graphischen Benutzeroberfläche GUI nach Fig. 10 keine Statusmitteilung T zugeschaltet.

### Bezugszeichenliste

- 1: Messeinheit
- 2: Erfassung vom Messsignal
- 3: Auswertung vom Messsignal
- 4: Darstellung vom Messsignal oder Messwert
- 5: Weiterverarbeitung vom Messsignal oder Messwert
- 10 bis 50: Spalte
- 10', 40': aktivierte Spalte
- 1x1 bis 5x5: eingeklapptes Fenster
- 1x1x1 bis 1x5x4: Feinstruktur
- 111 bis 135: aufgeklapptes Fenster
- 411 bis 425: aufgeklapptes Fenster
- C: Computerprogrammprodukt
- DA: Datenausgabeeinheit
- DB: Datenbus
- DE: Dateneingabeeinheit
- DP: Datenprozessor
- DS: Datenspeicher
- GUI: graphische Benutzeroberfläche
- i bis v: Identifikationsnummer
- I bis V: Indiziernummer
- M: physikalische Messgrösse
- R: elektronische Recheneinheit
- S: Messsystem
- T: Statusmitteilung
- U: Cursor
- V: Verfahren

## Patentansprüche

1. Verfahren (V) zur Messung mindestens einer physikalischen Messgrösse (M) ; unter Verwendung von Verfahrensparametern eines Messsystems (S), welche Verfahrensparameter mehrere für die Messung der physikalischen Messgrösse (M) benötigte Messeinheiten (1) umfassen, welche Verfahrensparameter die Verfahrensschritte von mindestens einer Erfassung (2) der physikalischen Messgrösse (M) als Messsignal, von mindestens einer Auswertung (3) vom Messsignal zu einem Messwert, von mindestens einer Darstellung (4) vom Messsignal oder Messwert und von mindestens einer Weiterverarbeitung (5) vom Messsignal oder Messwert umfassen; und mit einem Computerprogrammprodukt (C) zur Einstellung und Überwachung von Verfahrensparametern; **dadurch gekennzeichnet, dass** jeder Verfahrensparameter in einem ihm zugeordneten Fenster auf einer graphischen Benutzeroberfläche (GUI) wiedergegeben wird; dass jedes Fenster einklappbar ist, ein eingeklapptes Fenster (1x1 bis 5x5) verwendet genau den Raum auf der graphischen Benutzeroberfläche (GUI), um den zugeordneten Verfahrensparameter in Kurzform wiederzugeben; und dass jedes Fenster aufklappbar ist, ein aufgeklapptes Fenster (111 bis 135, 411 bis 425) verwendet genau den Raum auf der graphischen Benutzeroberfläche (GUI), um den zugeordneten Verfahrensparameter in Langform wiederzugeben.

2. Verfahren (V) nach Anspruch 1, **dadurch gekennzeichnet, dass** mehrere physikalische Messgrössen (M) gleichzeitig gemessen werden; und dass alle Verfahrensparameter der Messungen in den Verfahrensparametern zugeordneten Fenster auf einer graphischen Benutzeroberfläche (GUI) wiedergegeben werden.

3. Verfahren (V) nach einem der Ansprüche 1 oder 2, **dadurch gekennzeichnet, dass** Fenster mit zugeordneten Verfahrensparametern in Spalten (10 bis 50, 10') wiedergeben werden, und dass die Spalten (10 bis 50, 10', 40') aktivierbar und deaktivierbar sind, wobei Fenster (1x1 bis 5x5) einer deaktivierten Spalte (10 bis 50) eingeklappt werden; und Fenster (111 bis 135, 411 bis 425) einer aktivierten Spalte (10', 40') aufgeklappt werden.

4. Verfahren (V) nach Anspruch 3, **dadurch gekennzeichnet, dass** eine deaktivierte Spalte (10 bis 50) durch Bewegung eines Cursor (U) über eine Dateneingabeeinheit (DE) ausgewählt wird; und dass eine ausgewählte deaktivierte Spalte (10 bis 50) durch Drücken einer Taste der Dateneingabeeinheit (DE) aktiviert wird.

5. Verfahren (V) nach einem der Ansprüche 3 oder 4, **dadurch gekennzeichnet, dass** eine aktivierte Spalte (10', 40') durch Bewegung eines Cursor (U) über eine Dateneingabeeinheit (DE) ausgewählt wird; und dass eine ausgewählte aktivierte Spalte (10', 40') durch Drücken einer Taste der Dateneingabeeinheit (DE) deaktiviert wird.

6. Verfahren (V) nach einem der Ansprüche 1 bis 5, **dadurch gekennzeichnet, dass** die Verfahrensparameter in Gattungen eingeteilt werden, wobei eine erste Gattung von Verfahrensparametern mehrere für die Messung der physikalischen Messgrösse (M) benötigte Messeinheiten (1) umfasst, eine zweite Gattung mindestens eine Erfassung (2) der physikalischen Messgrösse (M) als Messsignal umfasst, eine dritte Gattung mindestens eine Auswertung (3) vom Messsignal zu einem Messwert umfasst eine vierte Gattung mindestens eine Darstellung (4) vom Messsignal oder Messwert umfasst, und eine fünfte Gattung mindestens eine Weiterverarbeitung (5) vom Messsignal oder Messwert umfasst; und dass in jeder Spalte (10 bis 50, 10', 40') Fenster von Verfahrensparametern ein und derselben Gattung wiedergegeben werden.

7. Verfahren (V) nach einem der Ansprüche 1 bis 6, **dadurch gekennzeichnet, dass** Fenster mit zugeordneten Verfahrensparametern aktivierbar und deaktivierbar sind; dass Verfahrensparameter von ein und derselben Messeinheit (1) miteinander verknüpft sind; und dass durch Aktivierung eines deaktivierten Fensters, Fenster von mit dem Verfahrensparameter des aktivierten Fensters verknüpften Verfahrensparametern markiert werden.

8. Verfahren (V) nach Anspruch 7, **dadurch gekennzeichnet, dass** ein deaktiviertes Fenster durch Bewegung eines Cursor (U) über eine Dateneingabeeinheit (DE) ausgewählt wird; und dass ein ausgewähltes deaktivierte Fenster durch Drücken einer Taste der Dateneingabeeinheit (DE) aktiviert wird.

9. Verfahren (V) nach einem der Ansprüche 7 oder 8, **dadurch gekennzeichnet, dass** ein aktiviertes Fenster durch Bewegung eines Cursor (U) über eine Dateneingabeeinheit (DE) ausgewählt wird; und dass ein ausgewähltes aktiviertes Fenster durch Drücken einer Taste der Dateneingabeeinheit (DE) deaktiviert wird.

10. Verfahren (V) nach einem der Ansprüche 1 bis 9, **dadurch gekennzeichnet, dass** bei Wiedergabe eines Verfahrensparameters in Kurzform ein minimaler Raum von weniger als 5% der graphischen Benutzeroberfläche (GUI) verwendet wird.

11. Verfahren (V) nach einem der Ansprüche 1 bis 10, **dadurch gekennzeichnet, dass** bei Wiedergabe eines Verfahrensparameters in Langform ein maximaler Raum von mehr als 50% der graphischen Benutzeroberfläche (GUI) verwendet wird.

12. Verfahren (V) nach einem der Ansprüche 1 bis 11, **dadurch gekennzeichnet, dass** ein Verfahrensparameter in einem ihm zugeordneten eingeklappten Fenster (1x1 bis 1x5) mit einer Feinstruktur (1x1x1 bis 1x5x4) wiedergegeben wird.

13. Verfahren (V) nach einem der Ansprüche 1 bis 12, **dadurch gekennzeichnet, dass** in eingeklappten Fenstern (1x1 bis 5x5) eine Statusmitteilung (T) der Verfahrensparameter des Messsystems (S) in der graphischen Benutzeroberfläche (GUI) wiedergegeben wird.

14. Messsystem (S) zur Durchführung des Verfahrens (V) nach einem der Ansprüche 1 bis 13, **dadurch gekennzeichnet dass** die Verfahrensparameter in Gattungen eingeteilt sind, wobei eine erste Gattung von Verfahrensparametern mehrere für die Messung der physikalischen Messgrösse (M) benötigte Messeinheiten (1) umfasst, eine zweite Gattung mindestens eine Erfassung (2) der physikalischen Messgrösse (M) als Messsignal umfasst, eine dritte Gattung mindestens eine Auswertung (3) vom Messsignal zu einem Messwert umfasst, eine vierte Gattung mindestens eine Darstellung (4) vom Messsignal oder Messwert umfasst, und eine fünfte Gattung mindestens einer Weiterverarbeitung (5) vom Messsignal oder Messwert umfasst; dass jede Gattung eine eineindeutige Indexnummer (I bis V) hat; und dass das Computerprogrammprodukt (C) auf der graphischen Benutzeroberfläche (GUI) in mindestens zwei Spalten (10 bis 50, 10', 40') die Fenster von Verfahrensparametern wiedergibt, welche die gleiche Indexnummer (I bis V) haben.

15. Messsystem (S) nach Anspruch 14, **dadurch gekennzeichnet, dass** Verfahrensparameter von ein und derselben Messeinheit (1) eine eineindeutige Identifikationsnummer (i bis v) haben; und dass das Computerprogrammprodukt (C) bei Aktivierung eines deaktivierten Fensters, auf der graphischen Benutzeroberfläche (GUI) Fenster von Verfahrensparametern markiert, welche die gleiche Identifikationsnummer (i bis v) wie der dem aktivierten Fenster zugeordnete Verfahrensparameter haben.
